# EUROPEAN PATENT APPLICATION

(11) **EP 4 366 051 A1**
(43) Date of publication of application: **08.05.2024**
(21) Application number: 22833075.9
(22) Date of filing: 27.06.2022
(51) Int. Cl.: H01M 50/197, H01M 50/184, H01M 50/193, H01M 50/198

(54) **TAB SEALANT AND POWER STORAGE DEVICE USING SAME**

(30) Priority: 30.06.2021 JP 2021108760
(71) Applicant: TOPPAN INC., Tokyo 110-0016 (JP)
(72) Inventor: MURAKI Takuya, Tokyo 110-0016 (JP); IMAMOTO Junya, Tokyo 110-0016 (JP)
(74) Representative: Hoffmann Eitle
(86) International application number: PCT/JP2022/025518
(87) International publication number: WO 2023/276928

(57) **Abstract**

A tab sealant disposed covering a part of an outer surface of metal terminals of a power storage device, the tab sealant including: a first sealant layer disposed facing the metal terminal; a high-melting-point layer containing a polyolefin resin; and a second sealant layer, which are laminated in this order, wherein each of the first sealant layer and the second sealant layer includes a low-melting-point layer containing acid-modified polyolefin resin and a medium-melting-point layer disposed between the low-melting-point layer and the high-melting-point layer, the low-melting-point layer has a melting point of 100°C to 135°C, the high-melting-point layer has a melting point of 140°C to 170°C, and the melting point of the medium-melting-point layer is higher than the melting point of the low-melting-point layer by 10°C or more and lower than the melting point of the high-melting-point layer by 10°C or more.

## Description

### [Technical Field]

The present disclosure relates to tab sealants and power storage devices using the same.

### [Background Art]

In recent years, there have been increasing demands for miniaturization of mobile devices and effective use of natural energy. Power storage devices such as lithium ion secondary batteries provide high voltage and high energy density. Research and development of power storage devices with more excellent performance is being conducted. As an aspect of the power storage device, laminate-type power storage devices are known in which a power storage device body is accommodated in a bag-shaped packaging material. The power storage device of this aspect generally includes metal terminals (also referred to as "tabs") for extracting current from the power storage device body. A part of the outer surface of the metal terminal is covered with a resin film called a tab sealant.

PTL 1 discloses an invention related to a resin film (sealant) for covering metal terminals of secondary batteries, which is excellent in dimensional stability and adhesiveness when heated, while ensuring insulating properties. A sealant 24 shown in Fig. 2 of PTL 1 includes a core layer 22 and two skin layers 21 and 23 disposed sandwiching the core layer 22. PTL 1 describes that the core layer 22 has a melt flow rate (MFR) in a range of 0.1 g/10 min or more and 2.5 g/10 min or less and the difference in MFR between the core layer 22 and the skin layers 21 and 23 should be in a range of 5 g/10 min or more and 30 g/10 min or less (see paragraph [0025] in PTL 1).

### [Citation List]

### [Patent Literature]

PTL 1: JP 2014-132538 A

### [Summary of Invention]

### [Technical Problem]

In power storage devices such as lithium ion secondary batteries, the power storage device body may suddenly generate heat for some reason and enter a high temperature state. When the internal pressure of the power storage device increases accordingly, the packaging material that accommodates the power storage device body swells. If the internal pressure continues to further increase, the packaging material eventually ruptures. The inventors of the present invention considered providing the tab sealant with safety performance, in which the tab sealant loses the sealing properties, decreasing the pressure, when the internal pressure of the power storage device reaches a certain level. For example, when the tab sealant has a multilayer structure including a layer with a melting point lower than that of the other layers, the heat of the power storage device body melts the low-melting-point layer, causing the internal gas to be released, whereby the internal pressure drops.

However, if the low-melting-point layer is simply provided in the tab sealant as described above, it is required to strictly control the temperature of the tab sealant in the production process of the power storage device. That is, if the temperature at which the tab sealant is fused is too high, the low-melting-point layer melts and flows, and thus the outer surface of the tab sealant (surface on the side closer to the heat source of heat-sealing) does not sufficiently adhere to the inner surface of the packaging material. On the other hand, if the temperature at which the tab sealant is fused is too low, the low-melting-point layer does not sufficiently melt, and thus the inner surface of the tab sealant (surface on the side farther from the heat source of heat-sealing) does not sufficiently adhere to the surface of the metal terminal.

The present disclosure provides a tab sealant that has safety performance in which an internal pressure of a power storage device decreases when the internal pressure reaches a certain level due to heat generated by the power storage device body, and is able to exhibit stable sealing properties during production of the power storage device, and provides a power storage device using the tab sealant.

### [Solution to Problem]

An aspect of the present disclosure relates to a tab sealant disposed covering a part of an outer surface of metal terminals of a power storage device. The tab sealant includes: a first sealant layer disposed facing the metal terminal; a high-melting-point layer containing a polyolefin resin; and a second sealant layer, which are laminated in this order, wherein each of the first sealant layer and the second sealant layer includes a low-melting-point layer containing acid-modified polyolefin resin and a medium-melting-point layer disposed between the low-melting-point layer and the high-melting-point layer, the low-melting-point layer has a melting point of 100°C to 135°C, the high-melting-point layer has a melting point of 140°C to 170°C, and the melting point of the medium-melting-point layer is higher than the melting point of the low-melting-point layer by 10°C or more and lower than the melting point of the high-melting-point layer by 10°C or more.

According to the above tab sealant, when the internal pressure of the power storage device reaches a certain level due to heat generated by the power storage device body, the low-melting-point layer of the first sealant layer melts, whereby the inside of the packaging material is electrically connected to the outside. Accordingly, the gas inside the packaging material is released to the outside, reducing the internal pressure. On the other hand, in the production process of the power storage device, stable sealing properties can be exhibited during production of the power storage device. That is, even if the temperature at which the tab sealant is fused is slightly too high and causes the low-melting-point layer of the second sealant layer to melt and flow, the medium-melting-point layer of the second sealant layer melts appropriately, whereby the sealing properties can be exhibited.

In the above tab sealant, each of the first sealant layer and the second sealant layer includes the medium-melting-point layer and the low-melting-point layer laminated in this order from the high-melting-point layer toward the surface. The tab sealant of the present disclosure may have a configuration in which the low-melting-point layer and the medium-melting-point layer are laminated in this order from the high-melting-point layer toward the surface. That is, according to another aspect, the tab sealant of the present disclosure includes: a first sealant layer disposed facing the metal terminal; a high-melting-point layer containing a polyolefin resin; and a second sealant layer, which are laminated in this order, wherein each of the first sealant layer and the second sealant layer includes a medium-melting-point layer containing acid-modified polyolefin resin and a low-melting-point layer disposed between the medium-melting-point layer and the high-melting-point layer, the low-melting-point layer has a melting point of 100°C to 135°C, the high-melting-point layer has a melting point of 140°C to 170°C, and the melting point of the medium-melting-point layer is higher than the melting point of the low-melting-point layer by 10°C or more and lower than the melting point of the high-melting-point layer by 10°C or more.

The melting point described in the present disclosure refers to the temperature at the peak top of a main peak, which is the peak with a greatest heat of fusion, as measured using a differential scanning calorimeter (DSC) under a condition of a heating rate of 10°C/min in accordance with ASTM D2117.

Another aspect of the present disclosure relates to a power storage device using the tab sealant described above. The power storage device includes: a power storage device body; a metal terminal electrically connected to the power storage device body; a packaging material that accommodates the power storage device body and sandwiches the metal terminal; and the tab sealant described above disposed between the metal terminal and the packaging material, wherein the first sealant layer of the tab sealant adheres to the metal terminal, and the second sealant layer adheres to the packaging material.

### [Advantageous Effects of Invention]

The present disclosure provides a tab sealant that has safety performance in which an internal pressure of a power storage device decreases when the internal pressure reaches a certain level due to heat generated by the power storage device body, and is able to exhibit stable sealing properties during production of the power storage device, and provides a power storage device using the tab sealant.

### [Brief Description of Drawings]

Fig. 1 is a perspective view illustrating a schematic configuration of a power storage device according to the present embodiment.
Fig. 2 is a cross-sectional view illustrating an example cross-section of a packaging material shown in Fig. 1.
Fig. 3 is a cross-sectional view of a tab sealant and a metal terminal shown in Fig. 1 taken along the line A-A.
Fig. 4 is a cross-sectional view illustrating an example cross-section of a tab sealant shown in Fig. 1.
Fig. 5 is an SEM image showing an example sea-island structure of a low-melting-point layer.
Fig. 6 is an SEM image showing an example sea-island structure of a medium-melting-point layer.
Fig. 7 is a schematic diagram illustrating a method of producing a sample for measuring heat sealing strength against an aluminum foil in examples.

### [Description of Embodiments]

With reference to the drawings, preferred embodiments of the present disclosure will be described below. Throughout the drawings, the same or corresponding components are denoted by the same reference signs, and repeated description is omitted. Further, dimensional ratios of the drawings are not limited to the ratios shown in the drawings.

### [Power Storage Device]

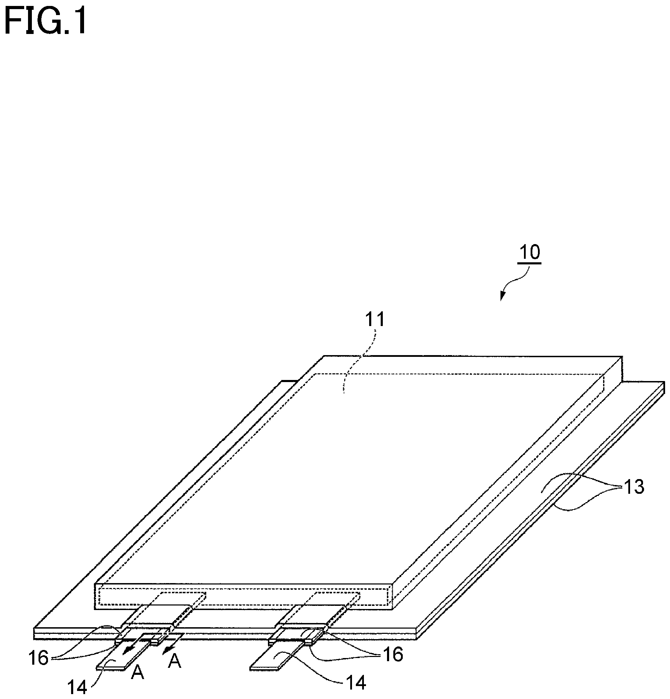

A power storage device 10 shown in Fig. 1 is a lithium ion secondary battery, and includes a power storage device body 11, an electrolyte solution (not shown), a packaging material 13, a pair of metal terminals 14 (tab leads), and tab sealants 16.

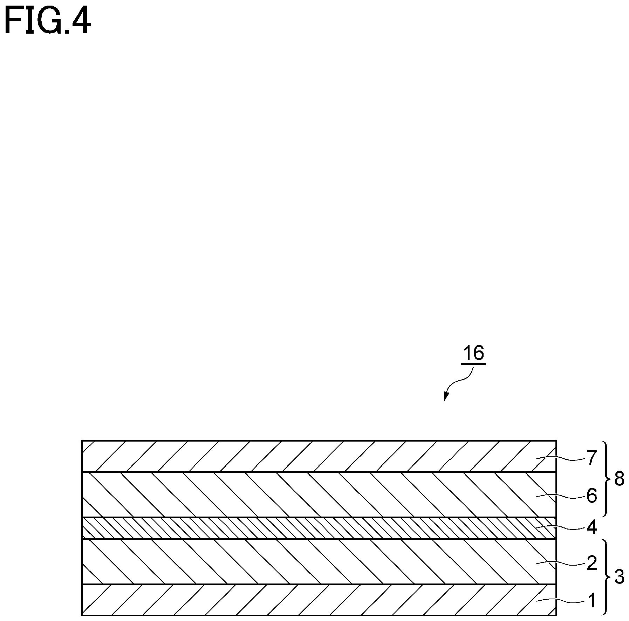

The power storage device body 11 is a battery body that can be charged and discharged. The packaging material 13 accommodates the power storage device body 11 and the electrolyte solution, and sandwiches the pair of metal terminals 14 via the tab sealant 16. The pair of metal terminals 14 are electrically connected to the power storage device body 11, and one end of each metal terminal 14 is located inside the packaging material 13 while the other end is located outside the packaging material 13. Apart of the outer surface of each of the metal terminals 14 is covered with the tab sealant 16 (see Fig. 1), and the tab sealant 16 is bonded to the packaging material 13. As shown in Fig. 4, the tab sealant 16 includes a first sealant layer 3 to be bonded to the metal terminal 14, a high-melting-point layer 4 containing a polyolefin resin, and a second sealant layer 8 to be bonded to the packaging material 13 laminated in this order.

### [Packaging Material]

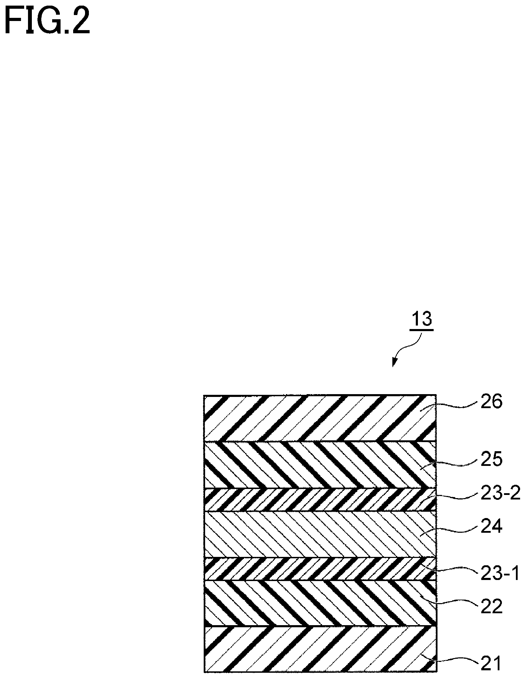

As shown in Fig. 2, the packaging material 13 has a multilayer structure in which an inner layer 21, an inner layer-side adhesive layer 22, a barrier layer 24, an outer layer-side adhesive layer 25, and an outer layer 26 are laminated in this order from the side facing toward the power storage device body. An anti-corrosion treatment layer 23-1 and an anti-corrosion treatment layer 23-2 are respectively formed on the surfaces of the barrier layer 24.

The inner layer 21 is a sealant layer that imparts sealing properties to the packaging material 13 by heat-sealing. The inner layer 21 is located inside the power storage device 10 and heat-sealed when the power storage device 10 is assembled. Base materials that can be used for the inner layer (sealant layer) 21 include, for example, polyolefin resins, or acid-modified polyolefin resins obtained by graft-modifying polyolefin resins with maleic anhydrides or the like. The polyolefin resins that can be used include: low-density, medium-density and high-density polyethylenes; ethylene-α-olefin copolymers; homo-, block- or random-polypropylenes; and propylene-α-olefin copolymers. Among these, the polyolefin resins may contain polypropylene. These polyolefin resins may be used singly or in combination of two or more.

Depending on the required functionality, the inner layer 21 may be a single-layer film or a multilayer film in which a plurality of layers are laminated. Specifically, a multilayer film interposed by a resin, such as ethylene-cyclic olefin copolymer or polymethyl pentene, may be used to impart moisture resistance. The inner layer 21 may contain various additives (e.g., flame retardants, slip agents, anti-blocking agents, antioxidants, photostabilizers, and tackifiers).

The inner layer 21 may have a thickness of 10 µm to 150 µm, and preferably 30 µm to 80 µm. By setting the thickness of the inner layer 21 to 10 µm or greater, sufficient adhesion between the packaging material 13 and the tab sealant 16 can be ensured. Furthermore, by setting the thickness of the inner layer 21 to 150 µm or less, the cost of the packaging material 13 can be prevented from increasing.

As the inner layer-side adhesive layer 22, a known adhesive can be appropriately selected and used, such as an adhesive for dry lamination, an acid-modified thermally adhesive resin, or the like.

As shown in Fig. 2, the anti-corrosion treatment layers 23-1 and 23-2 may be formed on opposing surfaces of the barrier layer 24, and from the viewpoint of cost reduction, the anti-corrosion treatment layer 23-1 alone may be provided, on the surface of the barrier layer 24 facing the inner layer-side adhesive layer 22.

The barrier layer 24 may be a metal layer having electrical conductivity. Examples of the material of the barrier layer 24 include aluminum and stainless steel, and from the viewpoint of cost, mass (density), and the like, aluminum may be used.

As the outer layer-side adhesive layer 25, a polyurethane adhesive containing polyester polyol, polyether polyol, acrylic polyol, or the like as a base resin can be used.

The outer layer 26 may be a single-layer film of Nylon, polyethylene terephthalate (PET), or the like, or a multilayer film. As with the inner layer 21, the outer layer 26 may contain various additives (e.g., flame retardants, slip agents, anti-blocking agents, antioxidants, photostabilizers, and tackifiers). The outer layer 26 may include a protective layer formed by laminating a resin that is insoluble in the electrolyte solution, or by coating a resin component that is insoluble in the electrolyte solution in preparation for leakage of electrolyte solution.

### [Metal Terminals]

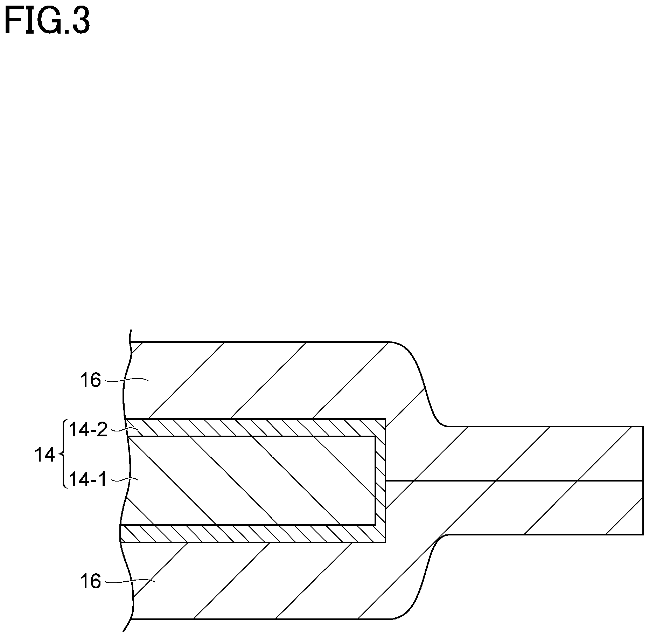

As shown in Figs. 1 and 3, a pair of metal terminals 14 each include a metal terminal body 14-1 and an anti-corrosion layer 14-2. Of the pair of metal terminal bodies 14-1, one metal terminal body 14-1 is electrically connected to a positive electrode of the power storage device body 11, and the other metal terminal body 14-1 is electrically connected to a negative electrode of the power storage device body 11. The pair of metal terminal bodies 14-1 extend in a direction away from the power storage device body 11, while being partially exposed from the packaging material 13. The pair of metal terminal bodies 14-1 may each have a plate-like shape, for example.

The metal terminal bodies 14-1 can be made of a metal. The metal can be determined considering the structure of the power storage device body 11, the materials of the components of the power storage device body 11, and the like.

When the power storage device 10 is a lithium ion secondary battery, the positive electrode current collector can be made of aluminum and the negative electrode current collector can be made of copper. From the viewpoint of corrosion resistance to the electrolyte solution, a material of the metal terminal body 14-1 connected to the positive electrode of the power storage device body 11 may be an aluminum material with a purity of 97% or more, such as 1N30. In addition, when the metal terminal body 14-1 is bent, a metal material which is tempered by sufficient annealing may be used for the purpose of adding flexibility. A material of the metal terminal body 14-1 connected to the negative electrode of the power storage device body 11 may be copper having a nickel-plated layer on the surface thereof, or nickel.

The thickness of the metal terminal bodies 14-1 can be determined according to the size or capacity of the lithium ion secondary battery. If the lithium ion secondary battery is of a small size, the thickness of the metal terminal bodies 14-1 may be 50 µm or greater. If the lithium ion secondary battery is of a large size, such as for power storage or in-vehicle use, the thickness of the metal terminal bodies 14-1 can be appropriately set within the range of 100 µm to 500 µm.

The anti-corrosion layer 14-2 is arranged covering a surface of the metal terminal body 14-1. Lithium ion secondary batteries include an electrolyte solution that contains corrosive components, such as LiPF₆. The anti-corrosion layer 14-2 minimizes corrosion of the metal terminal body 14-1 caused by the corrosive components, such as LiPF₆, contained in the electrolyte solution.

### [Tab Sealant]

The tab sealant 16 is disposed covering a part of the outer surface of the metal terminal 14 (see Figs. 1 and 3). The tab sealant 16 is a resin film having a multilayer structure (see Fig. 4). The tab sealant 16 includes a first sealant layer 3 composed of two layers, i.e., a low-melting-point layer 1 and a medium-melting-point layer 2, a high-melting-point layer 4, and a second sealant layer 8 composed of two layers, i.e., a medium-melting-point layer 6 and a low-melting-point layer 7, which are laminated in this order. That is, the tab sealant 16 has a structure in which the low-melting-point layer 1, the medium-melting-point layer 2, the high-melting-point layer 4, the medium-melting-point layer 6, and the low-melting-point layer 7 are laminated in this order.

When the tab sealant 16 is used and the internal pressure of the power storage device 10 reaches a certain level, for example, due to heat generated by the metal terminal 14, the low-melting-point layer 1 of the first sealant layer 3 is melted by the heat generated by the metal terminal 14, whereby the inside of the packaging material 13 is electrically connected to the outside. Accordingly, the gas inside the packaging material 13 is released to the outside, reducing the internal pressure. In production of the power storage device 10, a heat-sealing bar is pressed against the packaging material 13 so that the tab sealant 16 is fused to the packaging material 13 and the metal terminal 14. Even if the temperature at which the tab sealant 16 is heat-sealed is slightly too high and causes the low-melting-point layer 7 of the second sealant layer 8 to melt and flow, the medium-melting-point layer 6, which has a melting point higher than the low-melting-point layer 7, melts appropriately, whereby the sealing properties to the packaging material 13 can be exhibited.

The low-melting-point layer is formed using a resin composition containing an acid-modified polyolefin resin. Examples of the acid-modified polyolefin resin include graft-modified resins obtained by graft-modifying a polyolefin resin with maleic anhydride, carboxylic acid, sulfonic acid, or derivatives thereof, and copolymer resins obtained by copolymerizing an olefin with maleic anhydride, carboxylic acid, sulfonic acid, or derivatives thereof.

Examples of the polyolefin resin include low density, medium density or high density polyethylene; ethylene-α olefin copolymers; homo, block or random polypropylene; propylene-α olefin copolymers; polybutene; polymethylpentene; and polynorbornene. The polyolefin resin may contain polypropylene from the viewpoint of improving the heat resistance, processability, and adhesion to the packaging material.

The acid-modified polyolefin resin may be a graft-modified polyolefin resin from the viewpoint of adhesion to the metal terminals, and may be a maleic anhydride-modified polyolefin resin or an acid-modified random polypropylene copolymer from the viewpoint of improvement in heat sealing strength. The acid-modified polyolefin resins may be used singly or in combination of two or more.

The resin composition used for forming the low-melting-point layer may contain an acid-modified polyolefin resin other than the acid-modified random polypropylene copolymer as the acid-modified polyolefin resin, or may contain an unmodified resin (for example, polyethylene). The resin composition used for forming the low-melting-point layer may contain, for example, an acid-modified polyolefin resin other than the acid-modified random polypropylene copolymer or may contain an unmodified polyolefin resin. When the low-melting-point layer contains these resins, a sea-island structure is formed, making it easy to unseal the power storage device before the internal pressure of the packaging material increases to the maximum due to heat generated by the power storage device. Among these resins, the acid-modified polyethylene is preferred. The acid-modified polyethylene can easily achieve adhesion to the metal terminals even when it is blended in a relatively large amount.

The modification ratio of the polyolefin resin with an acid (e.g., the mass of the portion derived from maleic anhydride relative to the total mass of maleic anhydride-modified polypropylene) may be in the range of 0.1 mass% to 20 mass%, and preferably 0.3 mass% to 5 mass% from the viewpoint of improvement in heat sealing strength.

The resin composition used for forming the low-melting-point layer may contain resin additives such as compatibilizers, antioxidants, slip agents, flame retardants, photostabilizers, dehydrating agents, coloring pigments, tackifiers, fillers, and crystal nucleating agents. These additives may be used singly or in combination of two or more. The resin composition may contain a compatibilizer from the viewpoint of easily improving adhesion to the metal terminals or the packaging material. The resin composition may contain a coloring pigment or a filler from the viewpoint of improving the visibility of the tab sealant.

Examples of the compatibilizer include ethylene-propylene rubber (EPR), ethylene-propylene-diene rubber (EPDM), block copolymers, graft copolymers, and the like.

Examples of the block copolymer include block copolymers composed of a crystalline polyethylene unit and an ethylene/butylene copolymer unit, block copolymers composed of a polyethylene unit and an ethylene/1-octene copolymer unit, and block copolymers composed of a polypropylene unit and a polyethylene unit.

Examples of the graft copolymer include graft copolymers in which a polyethylene unit is grafted to polypropylene. Each unit constituting the copolymers described above may be a crystalline unit or an amorphous unit.

The compatibilizer may be a block copolymer or a graft copolymer from the viewpoint of easily improving adhesion to the metal terminals or the packaging material. When the resin composition used for forming the low-melting-point layer contains polyethylene, the compatibilizer may have a moiety compatible with polyethylene and a moiety compatible with acid-modified polyolefin resin. The compatibilizer can be used singly or in combination of two or more.

Examples of the coloring pigment include carbon black, quinacridone pigments, polyazo pigments, and isoindolinone pigments.

Examples of the filler include inorganic fillers such as aluminum oxide, silicon oxide, magnesium oxide, zirconium oxide, calcium carbonate, zirconium silicate, zinc oxide, barium sulfate, copper oxide, cobalt oxide, titanium oxide, tin oxide, iron oxide, antimony oxide, boron nitride, aluminum nitride, and silicon nitride.

The melting point of the low-melting-point layer is 100°C to 135°C. The melting point of the low-melting-point layer may be 105°C or higher, preferably 110°C or higher, more preferably 115°C or higher, and still more preferably 120°C or higher, and may be 130°C or lower, and preferably 127°C or lower. The melting point of the low-melting-point layer may be 110°C to 135°C, preferably 120°C to 135°C, and more preferably 120°C to 130°C.

The thickness of the low-melting-point layer (thickness per layer) may be 1 µm or greater, preferably 2 µm or greater, more preferably 3 µm or greater, still more preferably 5 µm or greater, still further more preferably 10 µm or greater, and still further more preferably 15 µm or greater. With the thickness within this range, a space formed by the thickness of the metal terminal can be sufficiently filled. The thickness of the low-melting-point layer may be 150 µm or less, preferably 100 µm or less, more preferably 50 µm or less, still more preferably 30 µm or less, and still further more preferably 20 µm or less. With the thickness within this range, the power storage device can be easily unsealed when the internal pressure of the power storage device increases due to heat generation.

The melt flow rate (MFR) of the low-melting-point layer at 230°C and a 2.16 kg load may be 0.8 g/10 min or greater, preferably 1.0 g/10 min or greater, more preferably 4.0 g/10 min or greater, still more preferably 6.0 g/10 min or greater, and may be 10.0 g/10 min or less, preferably 9.0 g/10 min or less, and more preferably 8.0 g/10 min or less. The MFR of the low-melting-point layer at 230°C and a 2.16 kg load may be 1.0 g/10 min to 10.0 g/10 min, and preferably 4.0 g/10 min to 9.0 g/10 min. By setting the MFR of the low-melting-point layer to 1.0 g/10 min or greater, the tab sealant can have improved elongation at break. Further, by setting the MFR of the low-melting-point layer to 10.0 g/10 min or less, the tab sealant can have improved breaking strength. The MFR described in the present disclosure refers to a value measured under the conditions of a measurement temperature of 230°C and a 2.16 kg load using a melt flow rate measurement device in accordance with JIS K 7210. For example, a measurement device manufactured by Toyo Seiki Seisaku-sho, Ltd. can be used.

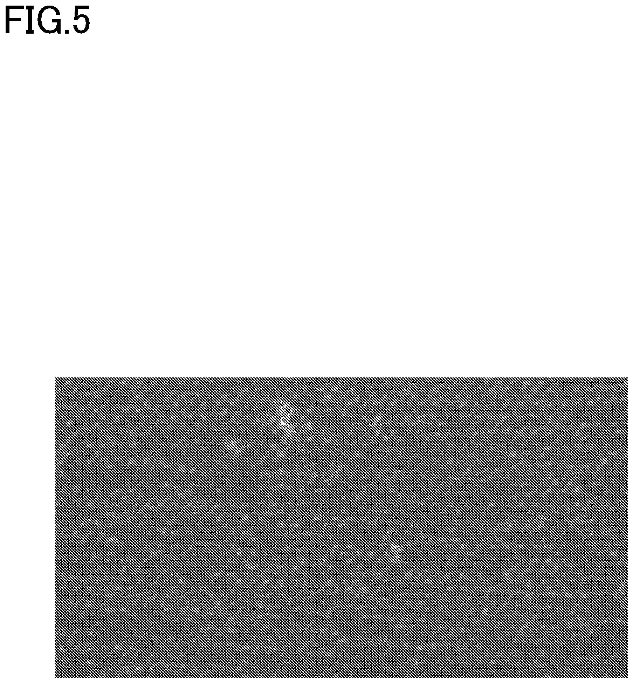

The low-melting-point layer may have a sea-island structure as shown in Fig. 5, for example, from the viewpoint of making it easy to unseal the power storage device before the internal pressure of the packaging material increases to the maximum due to heat generated by the power storage device. The area ratio of the island portion of the low-melting-point layer may be 5% to 90%, preferably 10% to 80%, and more preferably 20% to 60%. The area ratio of the island portion of the low-melting-point layer can be measured by observing the cross-section of the low-melting-point layer with a scanning electron microscope (SEM) and binarizing the observed image to calculate respective areas of the island and sea portions. Specifically, the measurement can be performed by the method described in the Examples below.

The Vicat softening point of the low-melting-point layer may be 80°C or higher, preferably 85°C or higher, and more preferably 90°C or higher, and may be 130°C or lower, preferably 125°C or lower, and more preferably 123°C or lower. The Vicat softening point of the low-melting-point layer may be 80°C to 130°C, preferably 85°C to 125°C, and more preferably 90°C to 125°C. The Vicat softening point of the low-melting-point layer may be lower than that of the medium-melting-point layer by 10°C or more from the viewpoint of improving adhesion to the metal terminal. The Vicat softening point of the low-melting-point layer can be measured by ASTM D1525 (standard test method for Vicat softening temperature of plastics), and specifically, the measurement can be performed by the method described in the Examples below. For the measurement of Vicat softening point, a testing machine No. 533 HDT (manufactured by Toyo Seiki Seisaku-sho, Ltd.) can be used, for example.

The medium-melting-point layer is formed using a resin composition containing an acid-modified polyolefin resin. Examples of the acid-modified polyolefin resin include graft-modified resins obtained by graft-modifying a polyolefin resin with maleic anhydride, carboxylic acid, sulfonic acid, or derivatives thereof, and copolymer resins obtained by copolymerizing an olefin with maleic anhydride, carboxylic acid, sulfonic acid, or derivatives thereof.

Examples of the polyolefin resin include low density, medium density or high density polyethylene; ethylene-α olefin copolymers; homo, block or random polypropylene; propylene-α olefin copolymers; polybutene; polymethylpentene; and polynorbornene. The polyolefin resin may contain polypropylene from the viewpoint of improving the heat resistance, processability, and adhesion to the packaging material.

The acid-modified polyolefin resin may be a graft-modified polyolefin resin from the viewpoint of adhesion to the metal terminals, and may be a maleic anhydride-modified polyolefin resin or an acid-modified random polypropylene copolymer from the viewpoint of improvement in heat sealing strength. The acid-modified polyolefin resins may be used singly or in combination of two or more.

The resin composition used for forming the medium-melting-point layer may contain a resin component (for example, rubber component) other than the acid-modified random polypropylene copolymer as the acid-modified polyolefin resin, or may contain an acid-modified polyolefin resin, or may contain an unmodified resin (for example, polyethylene), from the viewpoint of preventing excessive outflow of the resin during heat-sealing and easily improving adhesion to the packaging material. The resin composition used for forming the medium-melting-point layer may contain, for example, an acid-modified polyolefin resin other than the acid-modified random polypropylene copolymer or may contain an unmodified polyolefin resin. The medium-melting-point layer may have a sea-island structure due to these resins.

The resin composition used for forming the medium-melting-point layer may contain additives such as antioxidants, slip agents, flame retardants, photostabilizers, dehydrating agents, coloring pigments, tackifiers, fillers, and crystal nucleating agents. A plurality of types of these additives may be used in combination. The resin composition may contain a coloring pigment or a filler from the viewpoint of improving the visibility of the tab sealant. The coloring pigment and the filler may be the same as those used in the low-melting-point layer.

The thickness of the medium-melting-point layer (thickness per layer) may be 1 µm or greater, preferably 2 µm or greater, more preferably 3 µm or greater, still more preferably 5 µm or greater, still further more preferably 10 µm or greater, and still further more preferably 15 µm or greater from the viewpoint of easily improving adhesion to the metal terminals or the packaging material. The thickness of the medium-melting-point layer may be 150 µm or less, preferably 100 µm or less, more preferably 50 µm or less, still more preferably 30 µm or less, and still further more preferably 20 µm or less from the viewpoint of easily improving the processability and the breaking strength of the film.

The ratio of the thickness of the low-melting-point layer to the thickness of the medium-melting-point layer (thickness of low-melting-point layer / thickness of medium-melting-point layer) may be 0.1 or greater, preferably 0.5 or greater, more preferably 1 or greater, still more preferably 2 or greater, or still further more preferably 3 or greater. With the ratio within this range, excellent adhesion of the tab sealant to the packaging material is easily exhibited. The ratio may be 10 or less, preferably 8 or less, more preferably 6 or less, still more preferably 4 or less, or still further more preferably 3 or less. With the ratio within this range, the power storage device can be easily unsealed when the internal pressure of the power storage device increases due to heat generation.

When the thickness of the medium-melting-point layer is taken as 1, the thickness of the low-melting-point layer may be 1 or greater from the viewpoint of easily improving adhesion to the packaging material. When the first sealant layer of the tab sealant is heat-sealed to an aluminum plate under the conditions of 170°C, 0.5 MPa and 5 seconds, the thickness of the medium-melting-point layer of the second sealant layer may be 0.1 or greater, preferably 0.3 or greater, more preferably 0.4 or greater, still more preferably 0.5 or greater, still further more preferably 0.6 or greater, and still further more preferably 0.7 or greater from the viewpoint of easily improving adhesion to the packaging material. When the first sealant layer of the tab sealant is heat-sealed to an aluminum plate under the conditions of 170°C, 0.5 MPa and 5 seconds, the thickness of the medium-melting-point layer of the second sealant layer may be less than 1, and preferably 0.9 or less. When the thickness of the medium-melting-point layer is taken as 1, the thickness of the low-melting-point layer may be 1 or greater from the viewpoint of easily improving adhesion to the packaging material, and when the first sealant layer of the tab sealant is heat-sealed to an aluminum plate under the conditions of 170°C, 0.5 MPa and 5 seconds, the thickness of the medium-melting-point layer of the second sealant layer may be 0.1 or greater.

The melting point of the medium-melting-point layer is higher than that of the low-melting-point layer by 10°C or more and lower than that of the high-melting-point layer by 10°C or more. The melting point medium-melting-point layer may be 110°C or higher, preferably 120°C or higher, more preferably 125°C or higher, still more preferably 130°C or higher, and still further more preferably 135°C or higher, and may be 160°C or lower, preferably 155°C or lower, more preferably 150°C or lower, and still more preferably 145°C or lower. The melting point of the medium-melting-point layer may be 130°C to 150°C, preferably 135°C to 150°C, and more preferably 135°C to 145°C from the viewpoint of preventing excessive outflow of the resin during heat-sealing and easily improving adhesion to the packaging material.

The MFR of the medium-melting-point layer at 230°C and a 2.16 kg load may be 0.8 g/10 min or greater, preferably 1.0 g/10 min or greater, more preferably 4.0 g/10 min or greater, still more preferably 6.0 g/10 min or greater, and may be 10.0 g/10 min or less, preferably 9.0 g/10 min or less, and more preferably 8.0 g/10 min or less. The MFR of the medium-melting-point layer at 230°C and a 2.16 kg load may be 1.0 g/10 min to 10.0 g/10 min, and preferably 4.0 g/10 min to 9.0 g/10 min. By setting the MFR of the medium-melting-point layer to 1.0 g/10 min or greater, the tab sealant can have improved elongation at break. Further, by setting the MFR of the medium-melting-point layer to 10.0 g/10 min or less, the tab sealant can have improved breaking strength.

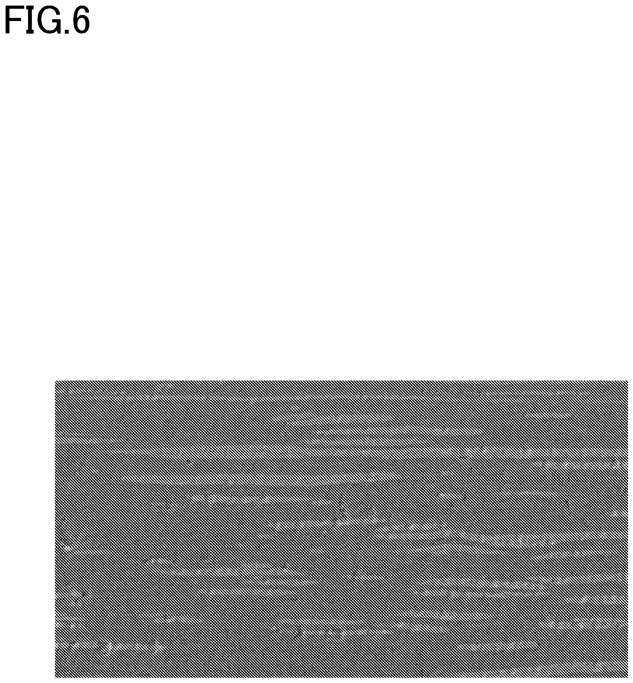

The medium-melting-point layer may have a sea-island structure as shown in Fig. 6, for example, from the viewpoint of making it easy to unseal the power storage device before the internal pressure of the packaging material increases to the maximum due to heat generated by the power storage device. The area ratio of the island portion of the medium-melting-point layer may be 1% to 50%, preferably 5% to 40%, and more preferably 10% to 30%. The area ratio of the island portion of the medium-melting-point layer can be measured by the same method as for the island portion of the low-melting-point layer.

The area ratio of the island portion of the low-melting-point layer may be 1.5 to 100 times, preferably 2 to 50 times, and more preferably 3 to 20 times the area ratio of the island portion of the medium-melting-point layer from the viewpoint of making it easy to unseal the power storage device when the internal pressure of the power storage device increases due to heat generated by the power storage device body. That is, the ratio of the area ratio of the island portion of the low-melting-point layer to the area ratio of the island portion of the medium-melting-point layer (area ratio of island portion of low-melting-point layer / area ratio of island portion of medium-melting-point layer) may be 1.5 to 100, preferably 2 to 50, and more preferably 3 to 20.

The Vicat softening point of the medium-melting-point layer may be 80°C or higher, preferably 85°C or higher, and more preferably 90°C or higher, still more preferably 100°C or higher, and still further more preferably 110°C or higher, and may be 140°C or lower, preferably 135°C or lower, more preferably 130°C or lower, still more preferably 125°C or lower, and still further more preferably 123°C or lower. The Vicat softening point of the medium-melting-point layer may be 80°C to 130°C, preferably 85°C to 125°C, and more preferably 90°C to 125°C. The Vicat softening point of the medium-melting-point layer can be measured by the same method as for the Vicat softening point of the low-melting-point layer.

The high-melting-point layer is formed using a resin composition containing a polyolefin resin. Examples of the polyolefin resin include low density, medium density or high density polyethylene; ethylene-α olefin copolymers; homo, block or random polypropylene; propylene-α olefin copolymers; polybutene; polymethylpentene; and polynorbornene. Among these, the polyolefin resin may be polypropylene or block polypropylene from the viewpoint of improving heat sealing strength and processability. The polyolefin resin used for the high-melting-point layer may be unmodified polyolefin resin from the viewpoint of improving insulating properties. The polyolefin resins may be used singly or in combination of two or more. The resin composition used for forming the high-melting-point layer may contain resins other than the polyolefin resin.

The resin composition used for forming the high-melting-point layer may contain additives such as antioxidants, slip agents, flame retardants, photostabilizers, dehydrating agents, coloring pigments, tackifiers, fillers, and crystal nucleating agents. A plurality of types of additives may be used in combination. The resin composition may contain a coloring pigment or a filler from the viewpoint of improving the visibility of the tab sealant. The coloring pigment and the filler may be the same as those used in the low-melting-point layer.

The thickness of the high-melting-point layer (thickness per layer) may be 2 µm or greater, preferably 10 µm or greater, more preferably 20 µm or greater, still more preferably 30 µm or greater, and still further more preferably 40 µm or greater from the viewpoint of improving insulation between the metal foil used in the packaging material and the metal terminals. The thickness of the medium-melting-point layer may be 100 µm or less, preferably 50 µm or less, more preferably 40 µm or less, and still more preferably 20 µm or less from the viewpoint of easily improving the processability and the breaking strength of the film.

The melting point of the high-melting-point layer is 140°C to 170°C. The melting point of the high-melting-point layer may be 145°C or higher, preferably 150°C or higher, and more preferably 155°C or higher, and may be 165°C or lower. The melting point of the high-melting-point layer may be 150°C to 170°C, preferably 150°C to 165°C, and more preferably 155°C to 165°C.

The MFR of the high-melting-point layer at 230°C and a 2.16 kg load may be 0.05 g/10 min or greater, and preferably 0.6 g/10 min or greater, and may be 5.0 g/10 min or less, preferably 3.0 g/10 min or less, more preferably 2.0 g/10 min or less, still more preferably 1.0 g/10 min or less. The MFR of the high-melting-point layer at 230°C and a 2.16 kg load may be 0.05 g/10 min to 3.0 g/10 min, preferably 0.05 g/10 min to 2.0 g/10 min, and more preferably 0.05 g/10 min to 1.0 g/10 min. By setting the MFR of the high-melting-point layer to 0.05 g/10 min or greater, the tab sealant can have improved elongation at break. Further, by setting the MFR of the low-melting-point layer to 3.0 g/10 min or less, the tab sealant can have improved breaking strength.

The thickness of each of the first sealant layer and the second sealant layer may be 10 µm to 300 µm, preferably 10 µm to 200 µm, more preferably 10 µm to 100 µm, still more preferably 10 µm to 50 µm, still further more preferably 10 µm to 30 µm, and still further more preferably 10 µm to 20 µm. The thicknesses of the first sealant layer and the second sealant layer may be the same or different.

The overall thickness of the tab sealant 16 may be 40 µm or greater, preferably 60 µm or greater, more preferably 80 µm or greater, still more preferably 100 µm or greater, and still further more preferably 200 µm or greater. The overall thickness of the tab sealant may be 1,000 µm or less, preferably 500 µm or less, more preferably 300 µm or less, still more preferably 200 µm or less, and still more further preferably 100 µm or less.

In the tab sealant 16, all the plurality of low-melting-point layers may be layers formed using the same resin. Further, all the plurality of low-melting-point layers may be layers formed using the same resin composition. Moreover, the plurality of low-melting-point layers may have the same thickness, melting point and MFR.

In the tab sealant 16, all the plurality of medium-melting-point layers may be layers formed using the same resin. Further, all the plurality of medium-melting-point layers may be layers formed using the same resin composition. Moreover, the plurality of medium-melting-point layers may have the same thickness, melting point and MFR.

The tab sealant 16 may include layers other than the low-melting-point layer, the medium-melting-point layer and the high-melting-point layer (layers that do not correspond to any of the low-melting-point layer, the medium-melting-point layer and the high-melting-point layer), or may be composed of only the low-melting-point layer, the medium-melting-point layer and the high-melting-point layer.

When a plane parallel to the surface of the tab sealant 16 is an XY plane, and a direction perpendicular to the XY plane (thickness direction of tab sealant 16) is a Z direction, a cross-section of the tab sealant 16 taken along the Z direction may have a layer configuration symmetrical in the Z direction with the high-melting-point layer at the center. That is, the tab sealant 16 shown in Fig. 4 may have a layer configuration in which the low-melting-point layer 1 and the low-melting-point layer 7 having the same configuration (composition, thickness, etc.), and the medium-melting-point layer 2 and the medium-melting-point layer 6 having the same configuration are symmetrical in the thickness direction of the tab sealant 16 with the high-melting-point layer 4 at the center, respectively. Such a configuration has an advantage that the user of the tab sealant 16 does not need to worry about which are the front and rear sides thereof.

A tab sealant according to another embodiment includes: a first sealant layer disposed facing the metal terminal; a high-melting-point layer containing a polyolefin resin; and a second sealant layer, which are laminated in this order, wherein each of the first sealant layer and the second sealant layer includes a medium-melting-point layer containing acid-modified polyolefin resin and a low-melting-point layer disposed between the medium-melting-point layer and the high-melting-point layer, the low-melting-point layer has a melting point of 100°C to 135°C, the high-melting-point layer has a melting point of 140°C to 170°C, and the melting point of the medium-melting-point layer is higher than the melting point of the low-melting-point layer by 10°C or more and lower than the melting point of the high-melting-point layer by 10°C or more. The above tab sealant also has safety performance in which the internal pressure of the power storage device decreases when the internal pressure reaches a certain level due to heat generated by the power storage device body, and can exhibit stable sealing properties during production of the power storage device. The low-melting-point layer, the medium-melting-point layer and the high-melting-point layer of the above tab sealant may be the same as the low-melting-point layer, the medium-melting-point layer and the high-melting-point layer described above.

### [Method of Producing Tab Sealant]

Next, a method of producing the tab sealant 16 will be described. The method of producing the tab sealant 16 should not be limited to one described below.

When the tab sealant 16 has a five-layer structure composed of low-melting-point layer medium-melting-point layer / high-melting-point layer / medium-melting-point layer / low-melting-point layer, the five layers may be laminated by a co-extrusion method, or after part of the five layers are formed as films in advance, the films may be laminated by a sandwich lamination method. For example, after a three-layer film composed of low-melting-point layer / medium-melting-point layer / high-melting-point layer and a low-melting-point layer are formed in advance, the three-layer film and the low-melting-point layer may be laminated using a resin composition constituting a medium-melting-point layer by a sandwich lamination method. Alternatively, after a three-layer film composed of low-melting-point layer / medium-melting-point layer / high-melting-point layer is formed in advance, a two-layer film composed of medium-melting-point layer / low-melting-point layer may be extruded onto the three-layer film for lamination.

Even when the number of layers constituting the tab sealant 16 is six or more, the tab sealant 16 can be produced by appropriately using the above production method.

As an example method of producing the tab sealant 16, a method of producing a five-layer film by a blown film method will be described.

First, base materials of a low-melting-point layer, a medium-melting-point layer, a high-melting-point layer, a medium-melting-point layer, and a low-melting-point layer are prepared. Next, the base materials of the low-melting-point layer, the medium-melting-point layer, the high-melting-point layer, the medium-melting-point layer, and the low-melting-point layer are supplied to a blown film molding machine. Then, while the five base materials are extruded from an extrusion portion of the blown film molding machine to form a five-layer structure (a structure in which the low-melting-point layer, the medium-melting-point layer, the high-melting-point layer, the medium-melting-point layer, and the low-melting-point layer are laminated in this order), air is supplied inside the extruded laminate of the five-layer structure.

While the five-layer film inflated in a cylindrical shape is transported, it is flattened by a guide portion, and then folded into a sheet shape by a pair of pinch rolls. Both ends of the folded tube are slit, and a pair (two strips) of films are wound around a winding core in a roll shape to thereby produce a tab sealant 16 having a five-layer structure in a roll shape.

The extrusion temperature may be 130°C to 300°C, and preferably 130°C to 250°C. By setting the extrusion temperature to 130°C or higher, the resin constituting each layer is sufficiently melted, reducing the melt viscosity. As a result, extrusion from the screw tends to be stable. By setting the extrusion temperature to 300°C or lower, oxidation and deterioration of the resin constituting each layer is suppressed, preventing a decrease in quality of the five-layer film.

The rotation rate, blow ratio, take-up speed, and the like of the screw can be appropriately set in consideration of the film thickness. The thickness ratio of the layers of the five-layer film can be adjusted by changing the rotation rate of each screw.

### [Method of Fusing Tab Sealant]

A fusion process for melt-bonding the tab sealant 16 shown in Fig. 4 to the packaging material 13 will be described. The following description will be given of a case where the low-melting-point layer 1 of the tab sealant 16 shown in Fig. 4 is disposed facing the metal terminal, and the low-melting-point layer 7 is disposed facing the packaging material.

In the fusion process, heating for melting the low-melting-point layer 7 and pressurization for bonding the low-melting-point layer 7 to the packaging material 13 are simultaneously performed so that the tab sealant 16 and the packaging material 13 are heat-sealed.

In the fusion process, heating may be performed to a temperature higher than or equal to the melting point of the resin constituting the low-melting-point layer 7 from the viewpoint of obtaining sufficient adhesion and sealing between the tab sealant 16 and the packaging material 13.

The heating temperature of the tab sealant 16 may be, for example, 140°C to 170°C. The processing time (the total time of the heating time and the pressurizing time) can be determined in consideration of the adhesion to the packaging material and the productivity. The processing time can be appropriately set in the range of 1 to 60 seconds, for example.

From the viewpoint of improving production takt (productivity) of the tab sealant 16, the heat-sealing may be performed at a temperature higher than 170°C for a short pressurization time. In this case, the heating temperature can be, for example, higher than 170°C and 230°C or less, and the pressurizing time can be, for example, 3 to 20 seconds.

Further, with reference to Fig. 3, a fusion process for melt-bonding the tab sealant 16 to the metal terminals 14 will be described. In the fusion process, heating for melting the low-melting-point layer 1 and pressurization for bonding the low-melting-point layer 1 to the metal terminal 14 are simultaneously performed so that the tab sealant 16 and the metal terminal 14 are heat-sealed.

In the fusion process, heating may be performed to a temperature higher than or equal to the melting point of the resin constituting the low-melting-point layer 1 from the viewpoint of obtaining sufficient adhesion and sealing between the tab sealant 16 and the metal terminals 14.

The heating temperature of the tab sealant 16 may be, for example, 140°C to 170°C. Furthermore, the processing time (the total time of the heating time and the pressurizing time) can be determined in consideration of the adhesion to the metal terminals and the productivity. The processing time can be appropriately set in the range of 1 to 60 seconds, for example.

From the viewpoint of improving production takt (productivity) of the tab sealant 16, the heat-sealing may be performed at a temperature higher than 170°C for a short pressurization time. In this case, the heating temperature can be, for example, higher than 170°C and 230°C or less, and the pressurizing time can be, for example, 3 to 20 seconds.

In the above embodiments, the tab sealant 16 is applied to the lithium ion secondary battery, but it is also applicable to power storage devices other than the lithium ion secondary battery (for example, solid-state batteries, lithium air batteries, and the like).

### Examples

The present disclosure will be specifically described below by using examples. However, the present disclosure should not be limited to the following examples.

### [Production of Tab Sealant]

An acid-modified random polypropylene resin (acid-modified random PP) was used as a base, and an acid-modified polyethylene resin (acid-modified PE) and/or a compatibilizer were added as necessary and dry-blended to prepare masterbatch resins. Table 1 shows the melting points and MFRs of the acid-modified random polypropylene resins, an acid-modified polyethylene resin and a compatibilizer used. In Table 1, the melting points and MFRs were measured by the methods described below.

**[Table 1]**

| Material | Melting point (°C) | MFR (g/10min) |
|---|---|---|
| Acid-modified random PP-1 | 127 | 8.0 |
| Acid-modified random PP-2 | 102 | 8.0 |
| Acid-modified random PP-3 | 135 | 8.0 |
| Acid-modified random PP-4 | 127 | 10.0 |
| Acid-modified random PP-5 | 127 | 5.0 |
| Acid-modified random PP-6 | 140 | 8.0 |
| Acid-modified random PP-7 | 150 | 7.0 |
| Acid-modified random PP-8 | 140 | 7.0 |
| Acid-modified random PP-9 | 155 | 7.0 |
| Acid-modified random PP-10 | 140 | 0.8 |
| Acid-modified random PP-11 | 137 | 7.0 |
| Acid-modified PE | 110 | 5.4 |
| Compatibilizer | 97 | 2.5 |

Using the prepared masterbatch resin, film formation was performed by a blown film method or a T-die method to produce a single layer of the masterbatch resin. Thus, base materials of the low-melting-point layer, the medium-melting-point layer and the high-melting-point layer were prepared. Table 2 shows the prepared base materials. The base materials F and G are different from each other in that the base material F contains a compatibilizer, whereas the base material G does not contain a compatibilizer. In Table 2, the melting points, MFRs, Vicat softening points were measured by the methods described below.

**[Table 2]**

| Type of base material | Base resin | Acid-modified polyethylene content (mass%) | Melting point (°C) | MFR (g/10min) | Vicat softening point (°C) | Compatibilize r |
|---|---|---|---|---|---|---|
| A | Acid-modified random PP-1 | 25 | 127 | 7.0 | 110 | Yes |
| B | Acid-modified random PP-2 | 25 | 102 | 7.0 | 90 | Yes |
| C | Acid-modified random PP-3 | 25 | 135 | 7.0 | 123 | Yes |
| D | Acid-modified random PP-4 | 50 | 135 | 7.0 | 123 | Yes |
| E | Acid-modified random PP-5 | 25 | 127 | 0.8 | 123 | Yes |
| F | Acid-modified random PP-6 | 25 | 140 | 7.0 | 123 | Yes |
| G | Acid-modified random PP-6 | 0 | 140 | 8.0 | 123 | No |
| H | Acid-modified random PP-1 | 0 | 127 | 7.0 | 110 | No |
| I | Acid-modified random PP-7 | 0 | 150 | 7.0 | 132 | No |
| J | Acid-modified random PP-8 | 0 | 140 | 7.0 | 123 | No |
| K | Acid-modified random PP-9 | 0 | 155 | 7.0 | 140 | No |
| L | Acid-modified random PP-10 | 0 | 140 | 0.8 | 123 | No |
| M | Acid-modified random PP-11 | 0 | 137 | 7.0 | 129 | No |
| N | Acid-modified random PP-3 | 0 | 135 | 7.0 | 123 | No |
| O | Block PP | 0 | 164 | 0.6 | - | No |
| P | Homo PP | 0 | 152 | 0.6 | - | No |
| Q | Block PP | 0 | 164 | 5.0 | - | No |
| R | Random PP | 0 | 148 | 0.6 | - | No |

### [Melting Point]

After a single layer was obtained by forming a film of the resin composition used for each layer, a melting peak was measured under a condition of a heating rate of 10°C/min using a differential scanning calorimeter (DSC) in accordance with ASTM D2117. The melting point was measured by reading the temperature at the peak top of a main peak, which is the peak with a greatest heat of fusion.

### [MFR]

After a single layer was obtained by forming a film of the resin composition used for each layer, an MFR was measured at a measurement temperature of 230°C and a 2.16 kg load using a melt flow rate measurement device (manufactured by Toyo Seiki Seisaku-sho, Ltd.) in accordance with JIS K 7210.

### [Vicat Softening Point]

After a single layer was obtained by forming a film of the resin composition used for each layer, measurement was performed by the A50 method of ASTM D1525 (standard test method for Vicat softening temperature of plastics).

### (Examples 1 to 12 and Comparative Examples 1 to 4)

Five layers composed of low-melting-point layer/medium-melting-point layer/high-melting-point layer /medium-melting-point layer/low-melting-point layer were laminated by co-extrusion at a co-extrusion temperature of 220°C by a blown film method to thereby obtain a tab sealant having a five-layer structure. The thickness of each layer was as shown in Table 3. In Comparative Example 1, no medium-melting-point layer was provided, and a tab sealant having a three-layer structure composed of low-melting-point layer/high-melting-point layer /low-melting-point layer was obtained. The "sea-island ratio" in Table 3 refers to the ratio of the area ratio of the island portion of the low-melting-point layer to the area ratio of the island portion of the medium-melting-point layer (area ratio of island portion of low-melting-point layer / area ratio of island portion of medium-melting-point layer). The area ratios of the island portions of the low-melting-point layer and the medium-melting-point layer were measured by the method described below. The "thickness ratio" in Table 3 refers to the ratio of the thickness of the low-melting-point layer to the thickness of the medium-melting-point layer (thickness of low-melting-point layer / thickness of medium-melting-point layer). The "remaining ratio of medium-melting-point layer" in Table 3 refers to the thickness of the medium-melting-point layer in the second sealant layer after heat-sealing relative to the thickness of the medium-melting-point layer in the second sealant layer before heat-sealing taken as 1, when the first sealant layer of the prepared tab sealant is heat-sealed to an aluminum plate under the conditions of 170°C, 0.5 MPa and 5 seconds.

**[Table 3]**

| | Low-melting-point layer | | Medium-melting-point layer | | High-melting-point layer | | Sea-island ratio | Thickness ratio | Remaining ratio of medium-melting-point layer (%) | Evaluation | | | |
|---|---|---|---|---|---|---|---|---|---|---|---|---|---|
| | Base material | Thickness (µm) | Base material | Thickness (µm) | Base material | Thickness (µm) | | | | Safety | Adhesion | Over-Adhesion | Embeddability |
| Ex. 1 | A | 15 | G | 5 | O | 40 | 6.0 | 3.0 | 0.6 | A | A | A | A |
| Ex.2 | B | 15 | H | 5 | P | 40 | 7.3 | 3.0 | 0.08 | A | B | B | A |
| Ex.3 | C | 15 | I | 5 | O | 40 | 4.0 | 3.0 | 0.7 | B | A | A | A |
| Ex.4 | D | 15 | J | 5 | O | 40 | 95.0 | 3.0 | 0.7 | A | A | A | A |
| Ex.5 | A | 15 | K | 5 | O | 40 | 6.0 | 3.0 | 0.7 | A | B | A | A |
| Ex.6 | A | 2 | G | 18 | O | 40 | 6.0 | 0.1 | 0.7 | B | A | A | A |
| Ex.7 | A | 18 | G | 2 | O | 40 | 6.0 | 9.0 | 0.3 | A | B | A | A |
| Ex.8 | E | 15 | L | 5 | O | 40 | 6.0 | 3.0 | 0.8 | A | A | A | B |
| Ex.9 | A | 15 | G | 5 | Q | 40 | 6.0 | 3.0 | 0.6 | A | A | B | A |
| Ex. 10 | A | 15 | F | 5 | O | 40 | 1.0 | 3.0 | 0.6 | B | A | A | A |
| Ex.11 | A | 15 | M | 5 | O | 40 | 6.0 | 3.0 | 0.6 | A | A | A | B |
| Ex.12 | G | 5 | A | 15 | O | 40 | 6.0 | 3.0 | 0.6 | B | A | A | A |
| Comp. Ex. 1 | A | 15 | - | - | O | 40 | - | - | 0.6 | A | C | A | A |
| Comp. Ex. 2 | F | 15 | I | 5 | O | 40 | 6.0 | 3.0 | 0.6 | C | A | A | A |
| Comp. Ex. 3 | A | 15 | N | 5 | O | 40 | 6.0 | 3.0 | 0.6 | A | C | B | A |
| Comp. Ex. 4 | A | 15 | G | 5 | R | 40 | 6.0 | 3.0 | 0.6 | A | A | C | A |

### [Area Ratio of Island Portion]

A resin film for terminals prepared as a pre-treatment was embedded in an epoxy resin and cured. The film embedded in the epoxy resin was sliced with a diamond knife of a microtome so that the cross-section of the low-melting-point layer and the medium-melting-point layer of the resin film for terminals was exposed. The obtained slice was stained with ruthenium tetroxide, and a portion swollen after staining was trimmed with the above microtome. The stained slice was placed in a scanning electron microscope (SEM), and the cross-section of the low-melting-point layer and the medium-melting-point layer of the resin film for terminals was observed. The observed image was binarized, and the area ratio of the island portion was calculated from the areas of the island portion and the sea portion of the sea-island structure of the low-melting-point layer and the medium-melting-point layer, and the ratio was calculated from the area ratio of the island portions of the low-melting-point layer and medium-melting-point layer.

### [Safety]

A battery was produced using the prepared resin film for terminals, and the produced battery was heated by raising the temperature to 140°C in a stepwise manner to visually inspect whether the bonded portion between the resin film and the metal terminal was unsealed after the internal pressure increased and the internal pressure was released. Table 3 shows the evaluation results.
A: The internal pressure released before reaching 130°C.
B: The internal pressure released before reaching 140°C.
C: The internal pressure not released even after reaching 140°C.

### [Adhesion to Packaging Material]

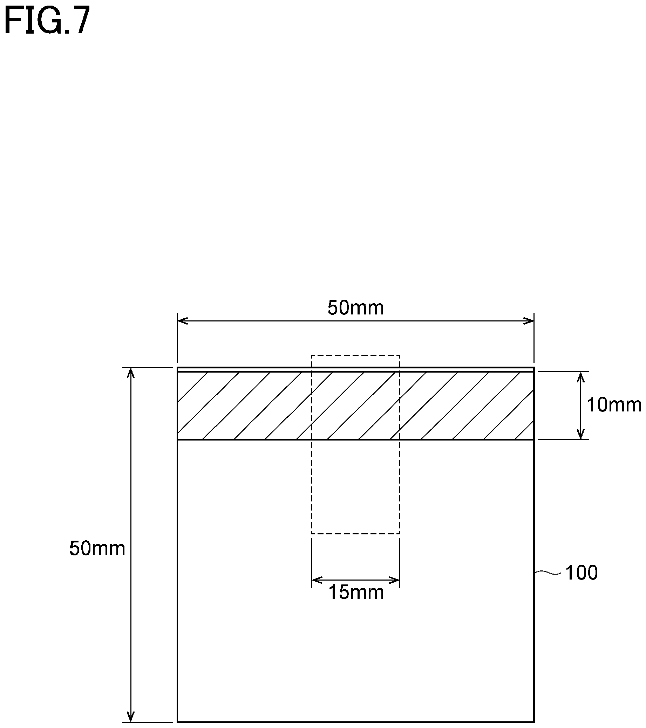

A sample obtained by cutting the tab sealant to a size of 50 mm (TD) × 100 mm (MD) was folded in half so as to sandwich a chemically treated aluminum foil cut into a size of 50 mm × 50 mm, and the edge opposite to the fold was heat-sealed with a width of 10 mm under the conditions of 165°C, 0.6 MPa and 10 seconds. Then, a packaging material having a laminate structure composed of nylon film (25 µm thickness) / adhesive / aluminum foil (40 µm thickness) / polypropylene sealant layer (thickness 80 µm) was folded so that the sealant layer was in contact with the tab sealant, and the edge opposite to the fold (portion where the tab sealant and the aluminum foil were heat-sealed) was heat-sealed with a width of 10 mm under the conditions of 190°C, 0.5 MPa and 5 seconds to produce a laminate composed of packaging material / tab sealant / aluminum foil / tab sealant /packaging material. A 15 mm-width portion was cut out from a longitudinal center part of the heat-sealed portion (see Fig. 7) to prepare a sample for measuring heat sealing strength. The heat-sealed portion in the sample was subjected to a T-peel test between the packaging material and the tab sealant using a tensile tester (manufactured by Shimadzu Corporation) in a room temperature environment (25°C) under the condition of a tension rate of 50 mm/min. From the obtained results, the heat sealing strength (burst strength) to the packaging material was evaluated based on the following evaluation criteria. Table 3 shows the results.
A: Heat sealing strength is 100 N/15 mm or greater
B: Heat sealing strength is 80 N/15 mm or greater and less than 100 N/15 mm
C: Heat sealing strength is less than 80 N/15 mm

### [Over-Adhesion]

In the adhesion test of the packaging material described above, a heat-sealed portion of the sample for measuring heat sealing strength cut to 15 mm width was visually inspected to evaluate whether fusion (over-adhesion) was present or not in an area that should not be heat-sealed. Table 3 shows the evaluation results.
A: Fusion was observed only in an area where the heat-sealing bar was pressed.
B: Fusion was observed in a range of 1 mm or less from the area where the heat-sealing bar was pressed.
C: Fusion was observed even in a range exceeding 1 mm from the area where the heat-sealing bar was pressed.

### [Embeddability]

The tab sealant was disposed so as to sandwich a metal terminal having a width of 6 mm and a thickness of 100 µm, and heat-sealing was performed every second under the conditions of 165°C and 0.6 MPa. Each time the heat-sealing was performed for 1 second, the embeddability of the side surface of the metal terminal was inspected by visually observing the presence or absence of penetration with a red-dye check (penetrant). Table 3 shows the evaluation results.
A: Good embeddability was achieved when a heat-sealing time was 1 second or 2 seconds.
B: Good embeddability was achieved when a heat-sealing time was 3 seconds.
C: Good embeddability was achieved when a heat-sealing time was 4 seconds or longer.

### [Reference Signs List]

- 1, 7: Low-melting-point layer
- 2, 6: Medium-melting-point layer
- 3: First sealant layer
- 4: High-melting-point layer
- 8: Second sealant layer
- 10: Power storage device
- 11: Power storage device body
- 13: Packaging material
- 14: Metal terminal
- 14-1: Metal terminal body
- 14-2: Anti-corrosion layer
- 16: Tab sealant
- 21: Inner layer
- 22: Inner layer-side adhesive layer
- 23-1, 23-2: Anti-corrosion treatment layer
- 24: Barrier layer
- 25: Outer layer-side adhesive layer
- 26: Outer layer

## Claims

1. A tab sealant disposed covering a part of an outer surface of metal terminals of a power storage device, the tab sealant comprising:
a first sealant layer disposed facing the metal terminal;
a high-melting-point layer containing a polyolefin resin; and
a second sealant layer, which are laminated in this order, wherein
each of the first sealant layer and the second sealant layer includes a low-melting-point layer containing acid-modified polyolefin resin and a medium-melting-point layer disposed between the low-melting-point layer and the high-melting-point layer,
the low-melting-point layer has a melting point of 100°C to 135°C,
the high-melting-point layer has a melting point of 140°C to 170°C, and
the melting point of the medium-melting-point layer is higher than the melting point of the low-melting-point layer by 10°C or more and lower than the melting point of the high-melting-point layer by 10°C or more.

2. The tab sealant according to claim 1, wherein
each of the first sealant layer and the second sealant layer has a two-layer structure including the low-melting-point layer and the medium-melting-point layer,
the medium-melting-point layer contains an acid-modified polyolefin resin, and
the medium-melting-point layer has a melting point of 130°C to 150°C.

3. The tab sealant according to claim 1 or 2, wherein
each of the first sealant layer and the second sealant layer has a thickness of 10 µm to 300 µm, and
each of the low-melting-point layer and the medium-melting-point layer has a thickness of 3 µm or greater.

4. The tab sealant according to any one of claims 1 to 3, wherein
each of the low-melting-point layer and the medium-melting-point layer has an MFR at 230°C and a 2.16 kg load of 1.0 g/10 min to 10.0 g/10 min, and
the high-melting-point layer has an MFR at 230°C and a 2.16 kg load of 0.05 g/10 min to 3.0 g/10 min.

5. The tab sealant according to any one of claims 1 to 4, wherein
each of the low-melting-point layer and the medium-melting-point layer has a sea-island structure, and
an area ratio of an island portion of the low-melting-point layer is 1.5 to 100 times an island portion of the medium-melting-point layer.

6. The tab sealant according to any one of claims 1 to 5, wherein
when a thickness of the medium-melting-point layer in the second sealant layer is taken as 1, a thickness of the low-melting-point layer is 1 or greater, and
when the first sealant layer of the tab sealant is heat-sealed to an aluminum plate under conditions of 170°C, 0.5 MPa and 5 seconds, the thickness of the medium-melting-point layer in the second sealant layer is 0.1 or greater.

7. The tab sealant according to any one of claims 1 to 6, wherein
in the second sealant layer, the low-melting-point layer has a Vicat softening point lower than a Vicat softening point of the medium-melting-point layer by 10°C or more.

8. The tab sealant according to any one of claims 1 to 7, wherein
the low-melting-point layer contains acid-modified polypropylene and polyethylene, and
the low-melting-point layer further contains a compatibilizer having a moiety compatible with the acid-modified polypropylene and a moiety compatible with the polyethylene.

9. A tab sealant disposed covering a part of an outer surface of metal terminals of a power storage device, the tab sealant comprising:
a first sealant layer disposed facing the metal terminal;
a high-melting-point layer containing a polyolefin resin; and
a second sealant layer, which are laminated in this order, wherein
each of the first sealant layer and the second sealant layer includes a medium-melting-point layer containing acid-modified polyolefin resin and a low-melting-point layer disposed between the medium-melting-point layer and the high-melting-point layer,
the low-melting-point layer has a melting point of 100°C to 135°C,
the high-melting-point layer has a melting point of 140°C to 170°C, and
the melting point of the medium-melting-point layer is higher than the melting point of the low-melting-point layer by 10°C or more and lower than the melting point of the high-melting-point layer by 10°C or more.

10. A power storage device comprising:
a power storage device body;
a metal terminal electrically connected to the power storage device body;
a packaging material that accommodates the power storage device body and sandwiches the metal terminal; and
the tab sealant according to any one of claims 1 to 9 disposed between the metal terminal and the packaging material, wherein
the first sealant layer of the tab sealant adheres to the metal terminal, and
the second sealant layer adheres to the packaging material.
